# EUROPÄISCHE PATENTSCHRIFT

(11) **EP 4 545 911 B1**
(45) Veröffentlichungstag und Bekanntmachung des Hinweises auf die Patenterteilung: **02.12.2026**
(21) Anmeldenummer: 24205354.4
(22) Anmeldetag: 08.10.2024
(51) Int. Cl.: G01D 5/245, H02K 11/215, H02K 41/03, G01D 5/249

(54) **ANTRIEB MIT MAGNETISCHER ABSOLUTCODIERUNG**
DRIVE WITH MAGNETIC ABSOLUTE ENCODING
ENTRAÎNEMENT À CODAGE ABSOLU MAGNÉTIQUE

(30) Priorität: 26.10.2023 DE 102023129609
(43) Veröffentlichungstag der Anmeldung: 30.04.2025
(73) Patentinhaber: SICK AG, 79183 Waldkirch (DE)
(72) Erfinder: Sellmer, Dr. Christian, 78166 Donaueschingen (DE); Thomae, Dominic, 79111 Freiburg (DE)

(56) Entgegenhaltungen:
- EP-A2- 2 378 253
- KR-A- 20150 145 407
- US-A1- 2009 243 598

## Beschreibung

Die vorliegende Erfindung betrifft das Gebiet magnetischer Absolutwertgeber zur Bestimmung einer Absolutposition bezüglich einer Position, insbesondere einer Längenposition, zweier, relativ zueinander verstellbarer Körper. Anwendungsbereich der Erfindung sind insbesondere Linearmotoren, die, bei Einsatz von Dauermagneten, eine spezielle Klasse bürstenloser Servomotoren bilden. Der Linearmotor erzeugt keine drehende Bewegung beim angetriebenen Körper, sondern bewegt diesen geradlinig oder entlang einer Kurvenbahn. Linearmotoren werden deshalb insbesondere dann eingesetzt, wenn eine direkte translatorische Bewegung umgesetzt werden muss. Eine Anwendung für Rotationsmotoren ist ebenfalls möglich.

Bei einem Linearmotor kann sich der bestromte Teil des Motors translatorisch bewegen, während der elektrisch passive, d.h. nicht bestromte Teil stillsteht, falls das Magnetfeld des stillstehenden Teils durch aneinandergereihte Permanentmagnete erzeugt wird. Die Reaktionskräfte, welche der sich bewegende aktive Körper auf den stillstehenden passiven Körper ausübt, müssen von dem Maschinenbett bzw. der Anlage aufgenommen werden. Weil Linearmotoren sehr hohe Beschleunigungen und Verfahrgeschwindigkeiten erreichen, eignen sie sich besonders gut für den Einsatz in Werkzeugmaschinen, Positionierungssystemen.

Grundsätzlich werden Absolutwertgeber insbesondere als Weg- oder Winkelmessgeräte an Werkzeugmaschinen, in der Automatisierungstechnik und an Mess- und Prüfeinrichtungen eingesetzt.

Absolutwertgeber geben die Absolutposition zumeist in Form eines digitalen Zahlenwerts aus. Da dieser Zahlenwert über die gesamte Messlänge bzw. Messbereich des Absolutwertgebers eindeutig ist, wird keine anfängliche Referenzfahrt, wie z.B. bei Inkrementalgebern, benötigt. Dagegen messen Inkrementalgeber eine relative Positionsänderung anhand einer Inkrementveränderung, wobei ein Inkrement als eine Basisstruktur aus Codeelementen einer sogenannten Maßverkörperung angesehen werden kann. Die Maßverkörperung ist in diesem Zusammenhang eine Verkörperung von Inkrementinformationen mittels abtastbaren Codeelementen.

Inkrementalgeber zählen in der Regel eine Anzahl von Inkrementen, die bei einer Positionsänderung überfahren werden. Hierbei ist die Relativposition nur bekannt in Bezug auf eine Position zu Beginn der Messung bzw. kann als Absolutinformation durch eine Referenzfahrt, z.B. an einen Anschlag oder an eine Referenzposition, ermittelt werden.

Neben optischen Absolutwertgebern, bei denen mehrere Codespuren einer Maßverkörperung mithilfe von optoelektronischen Sensoren parallel abgetastet werden, werden in verschmutzungsanfälligen Umgebungen oftmals auch magnetische Absolutwertgeber eingesetzt. Bei diesen erfolgt die Kodierung entweder durch Lageauswertung eines rotierenden Magneten oder durch Auswertung eines durch eine Maßverkörperung modulierten Magnetfeldes nach dem Nonius-Prinzip.

Weiterhin sind magnetische Absolutwertgeber bekannt, welche nach dem Code-Prinzip arbeiten. Hierbei sind die Codeelemente als magnetische Dipole ausgebildet, wobei je nach Ausrichtung eines jeweiligen Codeelements in der Maßverkörperung ein Nordpol oder ein Südpol abgetastet wird, wodurch ein Binärcode definiert wird. Es werden in jeder Winkel- oder Längenposition des Absolutwertgebers mehrere Codeelemente gleichzeitig abgetastet, wobei die Kodierung entlang der Maßverkörperung so gewählt ist, dass ein jeweiliges, bei einer bestimmten Position abgetastetes Bitmuster eindeutig ist.

In der Anmeldung DE 10 2018 118 477 A1 wird ein magnetischer Absolutwertgeber beschrieben zur Bestimmung einer Absolutposition zweier zueinander um eine Längen- oder Winkelposition verschieb- bzw. drehbar gelagerter Körper. Dabei lehrt die Anmeldung eine Absolutspur definierende Maßverkörperung, welche eine Vielzahl magnetischer Codeelemente umfasst. Eine Magnetfeldsensoranordnung tastet die aus den Codeelementen gebildete magnetische Maßverkörperung ab. Als absolute Codierung schlägt die DE 10 2018 118 477 A1 vor, dass jedes der ersten Codeelemente der Maßverkörperung um einen jeweiligen Kodierungsversatz versetzt zu einer dem jeweiligen ersten Codeelement zugeordneten virtuellen Referenzposition angeordnet ist, wobei die Referenzposition äquidistant und versatzfrei längs der Absolutspur angeordnet ist. D.h. die Codeelemente werden in oder gegen die Bewegungsrichtung der Körper versetzt angeordnet. In dem Patent EP 2 404 142 B1 wird alternativ die Verwendung von Kerben zur Ausbildung einer Maßverkörperung vorgeschlagen, welche parallel zueinander in Bewegungsrichtung eines sich über die Maßverkörperung bewegenden Körpers positioniert sind und welche sich durch ihre Kerbtiefe oder Kerbbreite unterscheiden und so eine Position des sich bewegenden Körpers kodieren können.

Das Prinzip der vorgeschlagenen Kodierungen basiert darauf, dass die Maßverkörperung ein magnetisches Streufeld erzeugt bzw. ein Streufeld eines extern erzeugten Magnetfeldes beeinflusst.

Die Absolutspur ist in Richtung einer Verstellrichtung, bzw. der Bewegungsrichtung eines Körpers, d.h. kreisförmig oder linear, angeordnet. Der in der DE 10 2018 118 477 A1 vorgeschlagene Kodierungsversatz der Codierelemente erfolgt dabei ausschließlich in Richtung der Absolutspur, d.h. entlang der linearen oder kreisförmigen Bewegungsrichtung des Körpers oder senkrecht zu dieser, d.h. in bzw. aus der Bewegungsebene des Körpers heraus. D.h. die Codierelemente sind in einer Ausführungsform in die Bewegungsebene des Körpers hinein oder aus dieser heraus versetzt, bzw. nach unten oder oben zu dieser verschoben. D.h. die DE 10 2018 118 477 A1 lehrt eine quer zur Bewegungsrichtung des Körpers versatzfreie Anordnung der Codierelemente, d.h. eine äquidistante und gleichmäßige Anordnung der Codierelemente quer zur Spurrichtung. Stattdessen sind die Codierelemente in die Spurebene hinein oder aus dieser heraus versetzt.

Sowohl die in EP 2 404 142 B1 als auch die in DE 10 2018 118 477 A1 beschriebene Absolutspur bildet eine zusätzliche Spur zu einer Antriebspur eines Antriebes. D.h. die Absolutspur und deren Codeelemente müssen zusammen mit der Sensorik an einen entsprechenden Antrieb angebracht werden. Das Anbringen erfordert einen zusätzlichen Aufwand und insbesondere zusätzlichen Platzbedarf für die Maßverkörperung des Gebers bei der Herstellung des Antriebs. Ferner steigert es die Kosten des Antriebs. Insbesondere das Anbringen des Absolutwertgebers an einen fertig hergestellten Antrieb ist folglich mit einem aufwändigen Umbau verbunden. Die EP 2 378 253 A2 beschreibt einen magnetischen Antrieb, bei dem in einer Ausführungsform zur Ausbildung einer Maßverkörperung unterschiedlich lange magnetische Antriebselemente quer zu der Spurrichtung angeordnet sind.

Es ist daher eine Aufgabe der Erfindung einen magnetischen Antrieb mit einem Absolutwertgeber bereitzustellen, wobei der Geber nur einen geringen zusätzlichen Raum in dem Antrieb benötigt und es insbesondere keiner zusätzlichen Maßverkörperung zur Bestimmung der Absolutposition des sich bewegenden Körpers bedarf.

Die Aufgabe wird gelöst durch den magnetischen Antrieb mit einem Absolutwertgeber nach Anspruch 1, sowie durch das Verfahren nach Anspruch 13. Weitere Ausführungsformen sind Gegenstand der abhängigen Ansprüche.

Der erfindungsgemäße magnetische Antrieb weist einen Absolutwertgeber zur Bestimmung einer Absolutposition eines ersten Körpers des magnetischen Antriebs auf, der sich verstellbar zu einem zweiten Körper des magnetischen Antriebs um eine Position, insbesondere eine Längenposition, zu diesem verschiebt, wobei der erste Körper Sensorelemente aufweist, um aus einer Maßverkörperung des Absolutwertgebers die Absolutposition zu ermitteln und wobei der zweite Körper in einer Spurebene entlang einer Spurrichtung, insbesondere äquidistant, voneinander beabstandete zu einer Magnetspur angeordnete magnetische Antriebselemente aufweist, dadurch gekennzeichnet, dass durch die jeweilige Anordnung der Antriebselemente, insbesondere quer zu einer Spurrichtung, in der Spurebene die Maßverkörperung ausgebildet ist, wobei die Antriebselemente in der Spurebene der Magnetspur, quer zu der Spurrichtung, insbesondere parallel zueinander, zumindest teilweise um einen jeweiligen Versatz zueinander angeordnet sind, so dass der jeweilige Versatz einen jeweiligen Codierbereich des Antriebselements der Magnetspur ausbildet und die Antriebselemente so zueinander in der Magnetspur angeordnet sind, dass durch die Codierbereiche die Maßverkörperung an den Rändern der Magnetspur ausgebildet ist.

Die Maßverkörperung ist insbesondere dadurch ausgebildet, dass die Antriebselemente in der Spurebene der Magnetspur quer zu einer Spurrichtung zumindest abschnittsweise zueinander versetzt angeordnet sind, wodurch sich Codierbereiche ausbilden, die voneinander unterscheidbare, jeweilige Feldstärken bzw. Signalstärken aufweisen, wenn sie durch Sensorelemente des ersten Körpers erfasst werden. Die gemessenen Signal- bzw. Feldstärken werden zu einer Auswerteeinheit geführt und von dieser in absolute Positionsdaten umgerechnet. Die Auswerteeinheit kann insbesondere auch gemessene Feldstärken in inkrementelle Positionsdaten umrechnen.

Da durch die Anordnung der Antriebselemente insbesondere quer zu einer Spurrichtung in der Spurebene die Maßverkörperung ausgebildet ist, benötigt der Absolutwertgeber des magnetischen Antriebs keine zusätzliche Maßverkörperung, d.h. keine als ein weiteres Bauteil ausgebildete Maßverkörperung. Dadurch kann vorteilhaft der Platzbedarf des Gebers zur Bestimmung der Absolutposition verringert werden. Weiter vereinfacht sich der Herstellungsprozess des Antriebs mit dem Absolutwertgeber, da keine zusätzlichen Codierelemente benötigt werden. Stattdessen werden durch die Anordnung der Antriebselemente in der Ebene der Magnetspur, quer, d.h. in einer im Wesentlichen senkrechten Richtung zu der Spurrichtung, Codierbereiche als Codierelemente ausgebildet, beispielsweise am Rand der Magnetspur. Die Codierbereiche bilden in ihrer Gesamtheit die Maßverkörperung. Somit kann lediglich durch das Anordnen der Antriebselemente mit geringem technischem Aufwand die Absolutwert-Kodierung des Absolutwertgebers umgesetzt werden. Die Anordnung könnte sich beispielsweise auch lediglich aus den Fertigungstoleranzen bei der Anordnung und Positionierung der Antriebselemente ergeben. Bevorzugt kann zusätzlich aus der, insbesondere äquidistanten Anordnung der Antriebselemente als solches, entlang der Magnetspur eine inkrementale Maßverkörperung zusätzlich zu einer absoluten umgesetzt sein.

Unter einer Spurebene ist vorliegend die Ebene zu verstehen, welche sich durch die Anordnung der Antriebselemente des zweiten Körpers ergibt und entlang bzw. innerhalb der sich der erste Körper im Wesentlichen bewegt. Dabei kann die Ebene bei einem linearen Antrieb im Wesentlichen als eine Fläche, d.h. als eine planare, ebene geometrische Fläche ausgebildet sein. Alternativ dazu kann die Ebene bei einem rotierenden Antrieb als die Mantelfläche eines Zylinders ausgebildet sein, auf der sich der erste Körper im Wesentlichen um den zweiten Körper rotierend bewegt.

Unter einer Spurrichtung ist vorliegend die Richtung zu verstehen, in welcher die Antriebselemente aneinandergereiht werden, um die Spurebene bzw. die Magnetspur zu bilden. Damit entspricht die Spurrichtung der Richtung, in die sich der erste Körper zu dem zweiten Körper bewegt. Bei einem linearen Antrieb ist die Spurrichtung im Wesentlichen geradlinig ausgebildet, während bei einem rotierenden Antrieb die Spurrichtung kreisförmig ausgebildet sein kann, beispielsweise als um die als Mantelfläche ausgebildete Spurebene herum verlaufend.

Unter einer Anordnung ist vorliegend im Wesentlichen die Positionierung der Antriebselemente zu einer Magnetspur zu verstehen. Die Antriebselemente werden entlang der Spurrichtung zu einer Spurebene, bevorzugt parallel und besonders bevorzugt äquidistant zueinander angeordnet, so dass durch die magnetische Wechselwirkung der Antriebselemente mit Elementen des ersten Körpers dieser entlang der Magnetspur bewegt wird. Die Anordnung kann einen Versatz der Antriebselemente zueinander aufweisen, wodurch Codierbereiche der Maßverkörperung ausgebildet werden.

Unter einer Maßverkörperung sind vorliegend die Komponenten des Absolutwertgebers zu verstehen, die es erlauben, die genaue Position oder den Wert eines gemessenen Parameters zu kodieren. In einem linearen Absolutwertgeber wird die Position entlang einer geraden Linie gemessen. Die Maßverkörperung kann beispielsweise ein Lineal oder ein Messband sein, das mit Markierungen oder Codes versehen ist, die die Position eindeutig identifizieren. In einem rotierenden Absolutwertgeber wird die Winkelposition gemessen. Die Maßverkörperung kann ein kreisförmiger Codierstreifen oder ein Ring sein, der auf dem Drehpunkt des Gebers angebracht ist und Absolutwerte für verschiedene Positionen aufweist. Vorliegend wird die Maßverkörperung durch die Anordnung der Antriebselemente gebildet. Je nach Anordnung und Ausgestaltung der Antriebselemente, entstehen Codierbereiche am Rand oder innerhalb der Antriebselemente bzw. der Magnetspur. Die Codierbereiche sind somit Teil der Magnetspur und die Gesamtheit der Codierbereiche kann eine oder mehrere Maßverkörperungen ausbilden. Es kann beispielsweise eine Maßverkörperung am Rand und eine weitere in einem mittleren Bereich der Magnetspur durch die Anordnung und Ausgestaltung der Antriebselemente ausgebildet sein, insbesondere wenn die Antriebselemente teilweise als mehrteilige Antriebselemente ausgebildet sind.

Erfindungsgemäß sind die Antriebselemente in der Spurebene der Magnetspur, quer zu der Spurrichtung, insbesondere parallel zueinander, zumindest teilweise um einen jeweiligen Versatz zueinander angeordnet, so dass der jeweilige Versatz einen jeweiligen Codierbereich des Antriebselements der Magnetspur ausbildet und die Antriebselemente so zueinander in der Magnetspur angeordnet sind, dass durch die Codierbereiche die Maßverkörperung an den Rändern der Magnetspur ausgebildet ist.

Indem die Antriebselemente zumindest teilweise zueinander versetzt angeordnet sind, bildet sich insbesondere auf zwei Seiten der Magnetspur, insbesondere bei rechteckförmigen Antriebselementen, eine erste und dazu komplementäre zweite Maßverkörperung aus. Dies hat den Vorteil, dass die Genauigkeit der Absolutposition durch das kombinierte Auswerten beider Positionsdaten höher wird als bei nur einer Maßverkörperung.

Die Antriebselemente sind zu anderen Antriebselementen in der Spurebene quer, bzw. senkrecht zu der Spurrichtung zumindest teilweise verschoben, bzw. versetzt in Bezug auf eine virtuelle Referenzposition, d.h. in Bezug auf eine gedachte Linie, entlang der Spurrichtung. D.h. die Referenzposition kann durch die Spurrichtung ausgebildet sein. Der jeweilige Versatz kann dabei bevorzugt für alle versetzten bzw. verschobenen Antriebselemente in Bezug auf die Referenzposition gleich groß sein, d.h. versetzte Antriebselemente werden um einen auf eine Referenzposition gleichen Betrag zueinander versetzt angeordnet. Durch den Versatz bilden sich Codierbereiche aus. Ist der Versatz gleich groß für alle Antriebselemente, so sind die Codierbereiche im Wesentlichen gleich groß. Der Versatz führt einerseits unmittelbar zu der Ausbildung eines Codierbereiches in dem Antriebselement, das versetzt wird, zum anderen werden durch den Versatz Bereiche nicht versetzter oder versetzter Antriebselemente ebenfalls zu Codierbereichen derjenigen Maßverkörperung, die sich als Folge des Versatzes in der Magnetspur entlang der Spurrichtung ausbildet.

Ein Antriebselement kann bezüglich einer Referenzposition so zu einem beispielsweise benachbarten Antriebselement versetzt sein, dass der Codierbereich des versetzten Antriebselementes durch einen Rand oder einen Endabschnitt des Antriebselementes ausgebildet ist. Der Codierbereich des unversetzten Antriebselementes ist dann durch einen Bereich unmittelbar neben dem Rand oder dem Endabschnitt des Antriebselementes repräsentiert, bzw. ausgebildet. Dies entspricht dann einem Bereich, im dem sich im Wesentlichen kein Teil oder Abschnitt des Antriebselementes befindet. D.h. dieser Codierbereich liegt im Wesentlichen außerhalb von einem Antriebselement. Somit weist der Codierbereich des versetzten Antriebselementes eine gewisse, dem Antriebselement im Wesentlichen entsprechende Feldstärke auf, während der Codierbereich des nicht versetzten Antriebselementes dazu verglichen nur eine geringe Feldstärke aufweist, welche sich im Wesentlichen durch den Bereich außerhalb des Randes, d.h. den Außenbereich, des Antriebselementes ergibt. Den daraus resultierenden unterschiedlichen Feldstärken benachbarter Codierbereiche lassen sich digitale Werte, d.h. 0 oder 1 zuweisen. Durch die Codierbereiche ist eine Codierung entlang einem Rand der Magnetspur, als eine Maßverkörperung ausgebildet. Der Versatz kann auch stufenweise so ausgebildet sein, dass sich aus den resultierenden Feldstärken benachbarter Codierbereiche mehr als nur zwei digitale Werten wie 0 oder 1, d.h. -1 0 1 oder 0 1 2 zuweisen lassen.

Ein Antriebselement weist mindestens einen Codierbereich auf. Der Codierbereich eines Antriebselements kann in einem Bereich um das Antriebselement herum angeordnet sein.

Unter einem Codierbereich ist vorliegend der Bereich eines Antriebselementes zu verstehen, der wie ein Codierelement einer Maßverkörperung wirkt und somit einen jeweiligen Teil der Maßverkörperung bildet. Ein Antriebselement kann mehrere Codierbereiche aufweisen. Ein Codierbereich kann dem mittleren Bereich eines beispielsweise rechteckförmig ausgebildeten Antriebselementes entsprechen, oder dem Randbereich, bzw. einem Endabschnitt des Antriebselementes. Ein Codierbereich kann auch außerhalb des Endabschnitts des Antriebselementes liegen.

Die daraus resultierenden unterschiedlichen Codierbereiche sind durch deren magnetische Feldstärke unterscheidbar. Die Codierbereiche sind so unterscheidbar, dass ihnen ein digitaler Wert 0 oder 1 eindeutig zugeordnet werden kann, wenn ein Sensorelement die Feldstärke des Codierbereiches misst. Bei einem zweiteilig oder mehrteilig ausgebildeten Antriebselement, entstehen Codierbereiche in den Bereichen zwischen den jeweiligen Teilen des Antriebselements. In diesen Zwischenbereichen ist der Magnetfluss geringer als in den übrigen, ungeteilten Bereichen des Antriebselementes. Ein Codierbereich kann grundsätzlich durch einen beliebigen Bereich eines Antriebselementes ausgebildet sein, solange sich der Bereich von dem Magnetfluss bzw. der Feldstärke eines anderen Bereichs unterscheiden lässt. Z.B. kann der Randbereich, d.h. ein Bereich im Wesentlichen außerhalb des Endabschnitts eines Antriebselementes einen ersten Codierbereich mit einer geringeren Feldstärke ausbilden und ein zweiter Codierbereich, durch die Mitte desselben Antriebselementes ausgebildet sein. Da in der Mitte des Antriebselementes eine höhere Feldstärke ausgebildet ist, sind beide Codierbereich voneinander unterscheidbar.

In einer besonders bevorzugten Ausführungsform des magnetischen Antriebs weisen die Antriebselemente in der Spurebene der Magnetspur, quer zu der Spurrichtung, als einen zusätzlichen Versatz eine jeweilige Länge auf, so dass die jeweilige Länge einen jeweiligen Codierbereich des Antriebselements der Magnetspur ausbildet und die Antriebselemente so zueinander in der Magnetspur angeordnet sind, dass durch die Codierbereiche die Maßverkörperung an den Rändern der Magnetspur ausgebildet ist.

In dieser Ausführungsform ist ein Versatz der Antriebselemente dadurch ausgebildet, dass die Antriebselemente zumindest teilweise kürzer oder länger als weitere Antriebselemente der Magnetspur sind. Somit resultiert aus den unterschiedlichen Längen der Antriebselemente, beispielsweise bei rechteckförmigen Antriebselementen, an den Rändern der Magnetspur eine Maßverkörperung.

In einer besonders bevorzugten Ausführungsform des magnetischen Antriebs, sind die Antriebselemente in der Spurebene der Magnetspur mehrteilig ausgebildet und die jeweiligen Teile weisen quer zu der Spurrichtung einen Versatz auf, so dass die Versätze der jeweiligen Teile jeweilige Codierbereiche des Antriebselements ausbilden und die Antriebselemente so zueinander in der Magnetspur angeordnet sind, dass durch die Codierbereiche mehrere Maßverkörperungen in der Magnetspur ausgebildet sind.

Da die jeweiligen Teile der Antriebselemente zueinander versetzt bzw. einen Abstand zueinander aufweisen, ist in den Bereichen zwischen den Teilen die Feldstärke geringer als in den übrigen Bereichen. Somit sind die Bereiche zwischen den Teilen von den anderen Bereichen digital unterscheidbar, d.h. so dass einem Bereich eindeutig der Wert 1 für eine hohe Feldstärke oder der Wert 0 für eine dazu messbar geringere Feldstärke, zugeordnet werden kann. Somit ergeben sich Codierbereiche in den Bereichen zwischen den Teilen und den übrigen Bereichen. In dieser Ausführungsform können sich insbesondere bei rechteckförmigen Antriebselementen mehrere Maßverkörperungen durch die Abstände zwischen den Teilen eines Antriebselementes innerhalb der Magnetspur vorteilhaft ausbilden. Dadurch kann die Genauigkeit der Positionsbestimmung erhöht werden.

In Form des magnetischen Antriebs, sind die Antriebselemente in der Spurebene der Magnetspur zweiteilig ausgebildet und der erste Teil des Antriebselementes weist zu dem zweiten Teil quer zu der Spurrichtung einen Abstand, d.h. einen Versatz auf, so dass durch den Versatz ein Codierbereich in dem Antriebselement ausgebildet ist und die Antriebselemente so zueinander in der Magnetspur angeordnet sind, dass durch die Codierbereiche zwei komplementäre Maßverkörperungen in der Magnetspur ausgebildet sind.

In dieser Form wird insbesondere bei rechteckförmigen Antriebselementen eine erste und dazu zweite komplementäre Maßverkörperung ausgebildet, welche innerhalb der Magnetspur verlaufen und nicht an deren Rand. Dies hat den Vorteil, dass die Genauigkeit der Absolutposition durch das kombinierte Auswerten beider Positionsdaten höher wird als bei nur einer Maßverkörperung. Ferner können die Ränder der Magnetspur als zusätzliche inkrementale Maßverkörperungen benutzt werden.

In einer bevorzugten Ausführungsform des magnetischen Antriebs, weist der erste Körper mindestens N Sensorelemente auf, deren Anordnung in der Spurebene entlang der Spurrichtung an die Anordnung der Antriebselemente angeglichen ist, so dass in Positionen des ersten Körpers jeweils ein Sensorelement der N Sensorelemente über dem Codierbereich eines jeweiligen Antriebselementes der Antriebselemente angeordnet ist.

Unter angeglichen ist vorliegend zu verstehen, dass die jeweiligen Sensorelemente der N Sensorelemente in Positionen der Vielzahl von Positionen des ersten Körpers nicht exakt über dem Codierbereich eines jeweiligen Antriebselementes angeordnet sein müssen, d.h. nicht äquidistant zueinander sein müssen, sondern einen von Sensorelement zu Sensorelement veränderten Abstand aufweisen können.

In einer besonders bevorzugten Ausführungsform des magnetischen Antriebs, weist der erste Körper mindestens 2N Sensorelemente auf, deren Anordnung in der Spurebene entlang der Spurrichtung der Anordnung der Antriebselemente angeglichen ist, so dass in Positionen des ersten Körpers jeweils zwei Sensorelemente der 2N Sensorelemente über dem Codierbereich eines jeweiligen Antriebselementes der Antriebselemente angeordnet sind.

In einer besonders bevorzugten Ausführungsform des magnetischen Antriebs, weist der erste Körper mindestens 2N Sensorelemente auf, deren Anordnung in der Spurebene entlang der Spurrichtung der Anordnung der Antriebselemente angeglichen ist, so dass in Positionen des ersten Körpers jeweils ein Sensorelement der 2N Sensorelemente über jeweils einem der Codierbereiche eines jeweiligen Antriebselementes der Antriebselemente angeordnet ist.

Dadurch kann die Genauigkeit der Positionsbestimmung verbessert werden, da die doppelte Anzahl von Positionsdaten beispielsweise eine Mittelwertbildung erlaubt.

In einer besonders bevorzugten Ausführungsform des magnetischen Antriebs, weist der erste Körper mindestens 4N Sensorelemente auf, deren Anordnung in der Spurebene entlang der Spurrichtung der Anordnung der Antriebselemente angeglichen ist, so dass in Positionen des ersten Körpers jeweils zwei Sensorelemente der 4N Sensorelemente über jeweils einem der Codierbereiche eines jeweiligen Antriebselementes der Antriebselemente angeordnet sind.

Dadurch kann die Genauigkeit der Positionsbestimmung verbessert werden. Zum einen dadurch, dass die doppelte Anzahl von Positionsdaten beispielsweise eine Mittelwertbildung erlaubt. Zum anderen dadurch, dass Positionsdaten unterschiedlicher Maßverkörperungen zur Positionsbestimmung benutzt werden können, insbesondere die Positionsdaten zueinander komplementärer Maßverkörperungen.

In einer bevorzugten Ausführungsform des magnetischen Antriebs, bilden jeweils N aufeinanderfolgende Codierbereiche ein jeweiliges Codewort der Maßverkörperung und jedes Codewort entlang der Magnetspur ist einmalig und stellt eine Absolutposition dar.

In diesem Zusammenhang definiert bezüglich einer Binärcodierung R = 2 die binären Zustände 0 oder 1. Die maximale Größe eines räumlichen Kodierungsversatzes ist von dem Abstand zweier unmittelbar benachbarter Relativpositionen beschränkt. Eine Anzahl N von Codeelementen kann von den Sensorelementen als Codewort gleichzeitig erfasst werden, so dass R^{N} verschiedene Positionsinformationen durch den Absolutwertgeber für die Bestimmung der Absolutposition ausgewertet werden können. N kann beispielsweise einen Wert, d.h. eine Bittiefe von 7, 8, 10 oder 11 Zeichen aufweisen.

In einer bevorzugten Ausführungsform des magnetischen Antriebs, ist die Gesamtheit der durch die Codierbereiche der Maßverkörperung codierten Zeichenfolge als ein Pseudo-Random-Binary-Sequence-Code (PRBS-Code) ausgebildet.

In einer besonders bevorzugten Ausführungsform des magnetischen Antriebs, sind die Antriebselemente als Permanentmagnete und/oder als Magnetspulen ausgebildet.

In einer besonders bevorzugten Ausführungsform des magnetischen Antriebs, ist der Antrieb als Linearantrieb ausgebildet und umfasst eine Auswerteeinheit, die eingerichtet ist, Sensordaten der Sensorelemente auszulesen und zu verarbeiten, um aus den Sensordaten die Absolutposition des ersten Körpers zu berechnen, wobei die magnetischen Antriebselemente des zweiten Körpers mit magnetischen Antriebselementen des ersten Körpers zum Antrieb des ersten Körpers magnetisch wechselwirken.

Ferner betrifft die Erfindung ein Verfahren zur Herstellung eines magnetischen Antriebs aufweisend einen magnetischen Absolutwertgeber, zur Bestimmung einer Absolutposition eines ersten Körpers des magnetischen Antriebs, der sich verstellbar zu einem zweiten Körper des magnetischen Antriebs um eine Position zu diesem verschiebt, wobei der erste Körper Sensorelemente aufweist, um aus einer Maßverkörperung die Absolutposition zu ermitteln und wobei der zweite Körper magnetische Antriebselemente aufweist, das Verfahren die folgenden Schritte umfassend:
- Aufbau einer Magnetspur, indem die Antriebselemente, insbesondere äquidistant, voneinander beabstandet zu der Magnetspur entlang einer Spurrichtung angeordnet werden, so dass die Antriebselemente in ihrer Gesamtheit eine Spurebene ausbilden;
- Anordnen der Antriebselemente in der Spurebene, insbesondere quer zu der Spurrichtung, so dass sich durch die Anordnung der Antriebselemente in der Spurebene die Maßverkörperung ausbildet.
- Anordnen der Antriebselemente in der Spurebene der Magnetspur, quer zu der Spurrichtung, insbesondere parallel zueinander, um einen jeweiligen Versatz zueinander, so dass der jeweilige Versatz einen jeweiligen Codierbereich des Antriebselements der Magnetspur ausbildet und die Antriebselemente so zueinander in der Magnetspur angeordnet sind, dass sich durch die Codierbereiche die Maßverkörperung an Rändern der Magnetspur ausbildet

In einer besonders bevorzugten Ausführungsform des Verfahrens zur Herstellung eines magnetischen Antriebs weist das Verfahren zusätzlich die folgenden Schritte auf:
- Anordnen der Antriebselemente in der Spurebene der Magnetspur, quer zu der Spurrichtung, wobei die Antriebselemente als zusätzlichen Versatz eine jeweilige Länge aufweisen, so dass die jeweilige Länge den jeweiligen Codierbereich des Antriebselements der Magnetspur ausbildet und die Antriebselemente so zueinander in der Magnetspur angeordnet sind, dass sich durch die Codierbereiche die Maßverkörperung am Rand der Magnetspur ausbildet; UND/ODER
- Anordnen der Antriebselemente in der Spurebene der Magnetspur, wobei die Antriebselemente mehrteilig ausgebildet sind und die jeweiligen Teile quer zu der Spurrichtung einen Versatz aufweisen, so dass die Versätze der jeweiligen Teile jeweilige Codierbereiche des Antriebselements ausbilden und die Antriebselemente so zueinander in der Magnetspur angeordnet sind, dass durch die Codierbereiche mehrere Maßverkörperungen in der Magnetspur ausgebildet sind.

Weitere bevorzugte Ausgestaltungen des erfindungsgemäßen Antriebs mit magnetischer Absolutcodierung und des Verfahrens zur Herstellung eines magnetischen Antriebs mit magnetischer Absolutcodierung ergeben sich aus der nachfolgenden Beschreibung der Ausführungsbeispiele in Zusammenhang mit den Figuren und deren Beschreibung. Gleiche Bauteile werden im Wesentlichen durch gleiche Bezugszeichen gekennzeichnet, falls dies nicht anders beschrieben wird oder sich nicht anders aus dem Kontext ergibt.
Fig. 1 zeigt eine schematische Darstellung einer Ausführungsform des erfindungsgemäßen magnetischen Antriebs mit einem ersten und zweiten Körper, wobei sich der erste Körper entlang einer Magnetspur des zweiten Körpers bewegt.
Fig. 2a zeigt eine schematische Darstellung einer Ausführungsform der Magnetspur des erfindungsgemäßen magnetischen Antriebs mit Sensorelementen zur Abtastung der Codierbereiche.
Fig. 2b zeigt eine schematische Ansicht eines Ausschnitts der Magnetspur mit vier Antriebselementen, die in unterschiedlichen Anordnungen dargestellt sind.
Fig. 3 zeigt eine schematische Darstellung einer Ausführungsform der Magnetspur des erfindungsgemäßen magnetischen Antriebs mit jeweils zwei Sensorelementen zur Abtastung der Codierbereiche.
Fig. 4 zeigt eine schematische Darstellung einer Ausführungsform der Magnetspur des erfindungsgemäßen magnetischen Antriebs mit zwei Sensorelementen zur Abtastung der Codierbereiche und zwei zueinander benachbarter Maßverkörperungen.
Fig. 5 zeigt eine schematische Darstellung einer Magnetspur eines magnetischen Antriebs nach Stand der Technik, wobei sich ein Versatz der Antriebselemente dadurch ergibt, dass die Antriebselemente teilweise unterschiedliche Längen aufweisen.
Fig. 6 zeigt eine schematische Darstellung einer Form der Magnetspur eines magnetischen Antriebs, wobei die Codierbereiche durch zweiteilig ausgeführte Antriebselemente innerhalb der Magnetspur ausgebildet sind.
Fig. 7 zeigt eine schematische Darstellung einer Form der Magnetspur eines weiteren magnetischen Antriebs, wobei die Codierbereiche teilweise durch zweiteilig ausgeführte Antriebselemente innerhalb der Magnetspur ausgebildet sind und teilweise durch Antriebselemente, die eine unterschiedliche Länge aufweisen.
Fig. 8 zeigt eine schematische Darstellung einer Ausführungsform der Magnetspur des erfindungsgemäßen magnetischen Antriebs, wobei die Codierbereiche teilweise durch zweiteilig ausgeführte Antriebselemente innerhalb der Magnetspur ausgebildet sind und teilweise zusätzlich zueinander versetzt angeordnet sind.

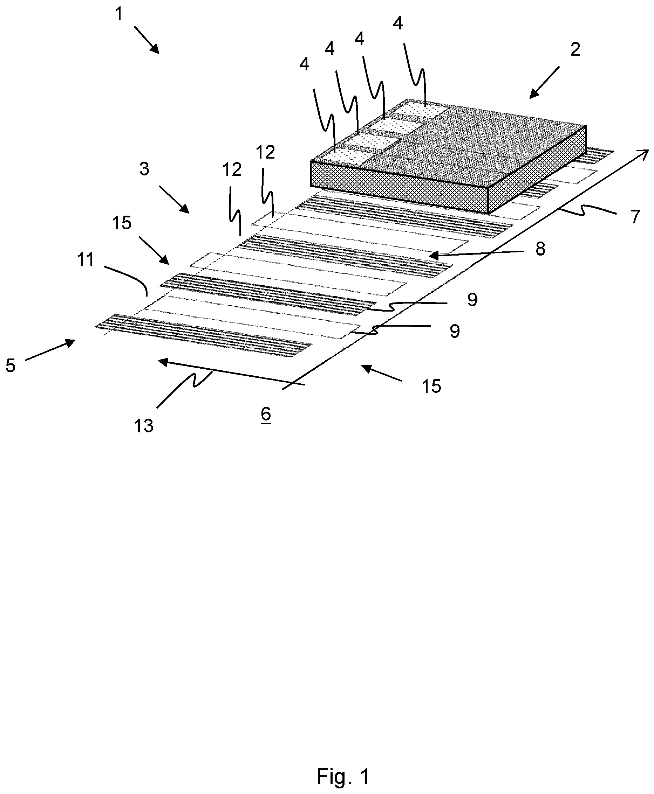

In Fig. 1 ist eine schematische Darstellung einer Ausführungsform des erfindungsgemäßen magnetischen Antriebs 1 mit einem ersten 2 und zweiten 3 Körper gezeigt, wobei sich der erste Körper 2 entlang einer Magnetspur 8 des zweiten Körpers 3 in Spurrichtung 7 bewegt. Die Magnetspur 8 ist in der Spurebene 6 ausgebildet. Die Magnetspur 8 weist mehrere, parallel zueinander angeordnete Antriebselemente 9 auf. Die Antriebselemente sind in einer Richtung 13 quer zur Spurrichtung 7 abschnittsweise verschoben, so dass sich ein Versatz 11 an den jeweiligen Rändern 15 der Magnetspur 8 ausbildet. Durch den Versatz 11 ergeben sich Codierbereiche 12 an den beiden Rändern 15 der Magnetspur 8. Die Codierbereiche 12 bilden eine jeweilige Maßverkörperung 5 an einem jeweiligen Rand 15 der Magnetspur 8 aus. Der Rand 15 erscheint durch den Versatz 11 der Antriebselemente 9 an den Rändern 15 ausgefranst. Die sich durch den Versatz 11 ergebenden Codierbereiche 12 sind dadurch gekennzeichnet, dass sie durch einen Endabschnitt oder einen Rand eines rechteckigen Antriebselementes 9 ausgebildet sind oder dadurch, dass sich in dem Codierbereich 12 gerade kein Antriebselement 9 mehr befindet, d.h. sich der Codierbereich 12 im Wesentlichen außerhalb des Antriebselementes 9 befindet. Die Codierbereiche 12 entsprechen deshalb Bereichen, die sich durch eine hohe Feldstärke und eine dazu geringere Feldstärke unterscheiden, so dass bei der Messung der Feldstärke in einem Codierbereich 12 durch ein Sensorelement 4 des ersten Körpers 2 zumindest eine erste oder eine zweite Feldstärke ergibt und diese einem digitalen Wert eindeutig zugeordnet werden kann. Dadurch wirken die Codierbereiche 12 als Codeelemente der Maßverkörperung 5 des Antriebs 1. In Fig. 1 umfasst der erste Körper 2, insgesamt vier Sensorelemente 4, welche zum Messen der Feldstärke in einem jeweiligen Codierbereich 12 ausgebildet sind, wenn sich der Körper 2 bewegt, oder wenn der Körper 2 stationär ist. Die Sensorelemente 4 sind in Fig. 1 so zueinander beabstandet, dass ein jeweiliges Sensorelement 4 über einem jeweiligen Codierbereich 12 eines Antriebselementes 9 positioniert sein kann, um dessen Feldstärke zu messen. Der Versatz 11 erfolgt in der Ebene der Spurrichtung 7 in einer im Wesentlichen senkrechten Richtung, bzw. in einer Richtung quer zu der Spurrichtung 7.

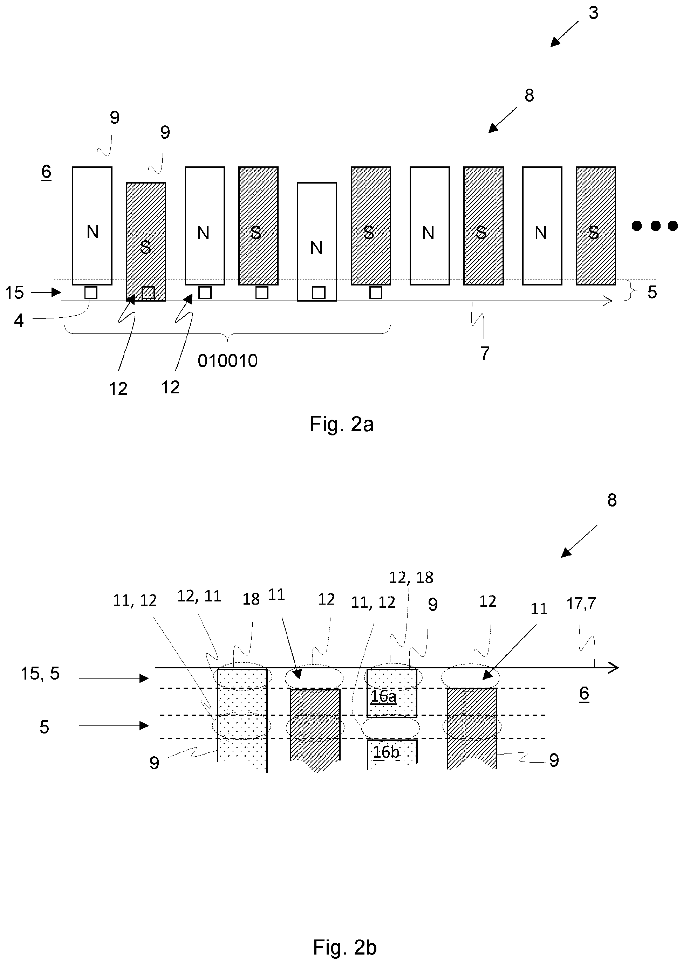

In Fig. 2a ist eine schematische Darstellung einer Ausführungsform der Magnetspur 8 des erfindungsgemäßen magnetischen Antriebs 1 mit sechs Sensorelementen 4 zur Abtastung der Codierbereiche 12 dargestellt. Die Ausführungsform der Magnetspur 8 entspricht dabei einer Draufsicht der in Fig. 1 dargestellten Magnetspur 8. An einem Randbereich 15 der Magnetspur 8 sind die sechs Sensorelemente 4 des ersten Körpers 2 (nicht dargestellt) so positioniert gezeigt, dass die Sensorelemente 4 über einen jeweiligen Codierbereich 12 der Antriebselemente 9 angeordnet sind. Die Codierbereiche 12 resultieren aus dem parallelen Versatz 11 der Antriebselemente zueinander und quer zur Spurrichtung 7. Die Codierung erfolgt dadurch, dass nur bestimmte Antriebselemente 9 zu einer virtuellen Referenzposition, welche durch die in Fig. 2a angedeutete Spurrichtung 7 gegeben sein kann, tatsächlich versetzt werden und die sich dadurch am Rand 15 der Magnetspur 8 ausbildende Feldstärkemodulation der gewünschten Codierung entspricht. Es kann festgelegt werden, dass ein Codierbereich 12 mit einer geringen Feldstärke wie in Fig. 2a angedeutet einem digitalen Wert 0 entspricht und ein Codierbereich mit einer dazu höheren Feldstärke einem digitalen Wert 1 entspricht. Dadurch ergibt sich das in Fig. 2 beim Auslesen der über den Codierbereichen 12 angeordneten sechs Sensorelementen 4 dargestellte bit-Muster 010010, welches einer Absolutposition der Maßverkörperung 5 entspricht. Die Polarisation bzw. die "N", "S" Richtung der Magnetfelder der Antriebselemente 9 ist dabei aus der Zeichenebene hinaus bzw. in die Zeichenebene hinein dargestellt, so dass für ein jeweiliges Antriebselement 9 nur die "S" oder "N" Polarisation in dieser Darstellung sichtbar ist.

In Fig. 2b ist eine schematische Ansicht eines Ausschnitts der Magnetspur 8 mit vier Antriebselementen 9 gezeigt. Die Antriebselemente 9 sind in vier unterschiedlichen Anordnungen in der Spurebene 6 dargestellt. Durch das Versetzen 11 ergeben sich insgesamt zwei Maßverkörperungen 5, die jeweils durch gestrichelte Linien angedeutet sind.

Das linke, erste Antriebselement 9 weist keinen Versatz 11 auf. Die von links zweiten und vierten Antriebselemente 9 sind gegen die Referenzspur 17, die mit der Spurrichtung 7 übereinstimmt, um den Versatz 11 zu dieser versetzt angeordnet. Durch den Versatz 11 bilden sich außerhalb der Antriebselemente 9 an dem Rand 15 der Magnetspur 8 zwei Codierbereiche 12 aus, welche jeweils durch gestrichelte Kreise angedeutet sind. Dadurch wirken die Randbereiche oder Endabschnitte 18 der nicht zur Referenzposition 17 versetzten Antriebselemente 9, d.h. das von links erste und dritte Antriebselement 9, auch als Codierbereich 12. Mit anderen Worten, der Versatz 11 eines Antriebselementes 9 führt zur Ausbildung eines Codierbereiches 12 des Antriebselementes 9 und sowie zur Ausbildung von Codierbereichen 12 weiterer Antriebselemente, so dass sich eine Maßverkörperung 5 aus der Anzahl der ausgebildeten Codierbereiche 12 ergibt. Beispielsweise ist das in Fig. 2b von links dritte Antriebselement in einen ersten 16a und zweiten 16b Teil aufgeteilt. Die Teile 16a, 16b sind um den Versatz 11 voneinander versetzt, wodurch sich ein Codierbereich 12 zwischen dem ersten 16a und zweiten 16b Teil ausbildet. Dieser definiert die weiteren in Fig. 2b eingezeichneten Codierbereiche 12 der von links aus ersten, zweiten und vierten Antriebselemente 9, so dass aus dem durch den Versatz 11 entstandenen Codierbereich 12 des einen Antriebselementes 9 und den daraus resultierenden Codierbereichen 12 der weiteren Antriebselemente 9 eine Maßverkörperung 5 resultiert, die im mittleren Bereich der Magnetspur 8 verläuft.

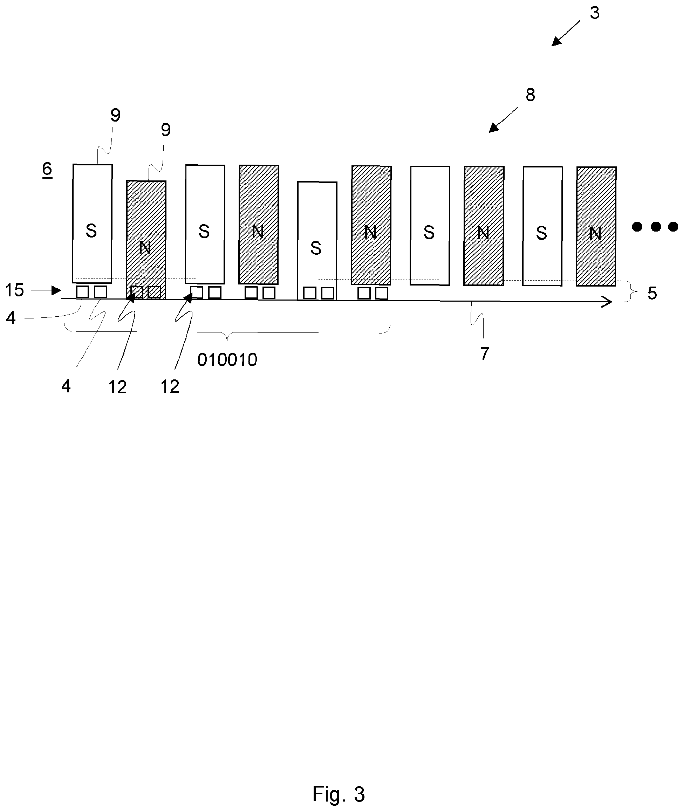

In Fig. 3 ist eine schematische Darstellung einer Ausführungsform der Magnetspur 8 des erfindungsgemäßen magnetischen Antriebs 1 gezeigt, bei der mit jeweils zwei Sensorelementen 4 die Codierbereiche 12 abgetastet werden. Dadurch kann die Genauigkeit der Positionsbestimmung beispielsweise durch Mittelwertbildung erhöht werden. In diesem Fall umfasst der erste Körper 2 2N Sensorelemente verglichen mit der in Fig. 1 und Fig. 2 gezeigten Ausführungsform des ersten Körpers 2. Zur weiteren Beschreibung wird auf Fig. 2 verwiesen. Die Antriebselemente 9 sind in Spurrichtung 7 bevorzugt äquidistant zueinander beabstandet.

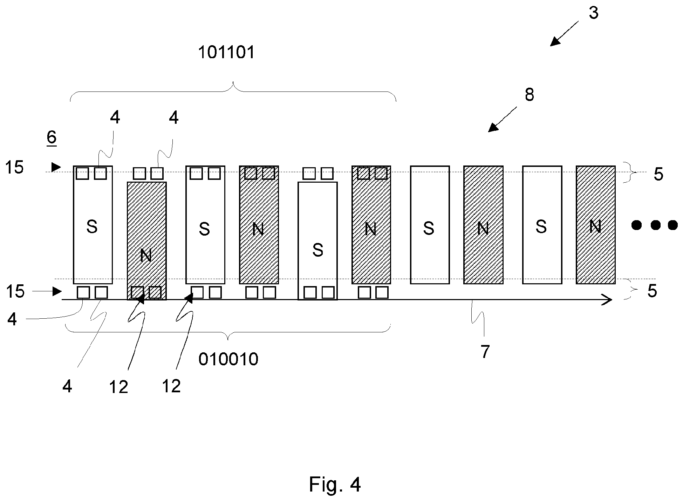

In Fig. 4 ist eine schematische Darstellung einer Ausführungsform der Magnetspur 8 des erfindungsgemäßen magnetischen Antriebs 1 mit je zwei Sensorelementen 4 zur Abtastung der Codierbereiche 12 und zwei zueinander benachbarter Maßverkörperungen 5 schematisch dargestellt. Durch den Versatz 11 in einer Richtung 13 quer zur Spurrichtung 7 sind an den Rändern 15 der Magnetspur 8 zwei zueinander komplementäre Maßverkörperungen 5 ausgebildet. Entsprechend weist der erste Körper 2 vier N Sensorelemente zur Abtastung der durch den Versatz 11 ausgebildeten Codierbereiche 12 an einem jeweilige Rand 15 der Magnetspur 8 auf. Die Abtastung erfolgt somit mit jeweils zwei Sensorelementen 4 pro Maßverkörperung. Durch eine komplementäre Maßverkörperung 5 kann eine Absolutposition genauer bestimmt werden. Dabei können die Sensorelemente beispielsweise als Hall-Sensoren zur Bestimmung der magnetischen Feldstärke eines Codierbereich 12 ausgebildet sein.

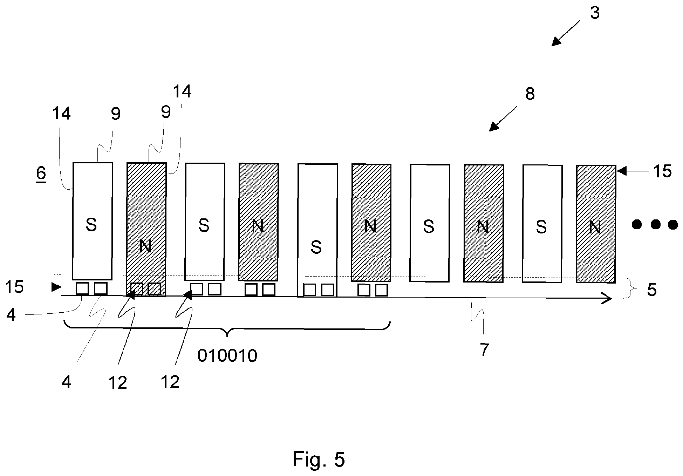

In Fig. 5 ist eine schematische Darstellung einer Magnetspur 8 eines magnetischen Antriebs 1 nach Stand der Technik, bei der sich ein Versatz 11 der Antriebselemente 9 dadurch ergibt, dass sich die Antriebselemente 9 in ihrer Länge 14 unterscheiden. Durch die unterschiedlichen Längen 14 der Antriebselemente 9 ist ein Rand 15 der Magnetspur 8 bündig abschließend, während an dem dazu gegenüberliegenden Rand 15 durch die Codierbereiche 12 die Maßverkörperung 5 ausgebildet ist. Die in Fig. 5 eingezeichneten Sensorelemente 4 des ersten Körpers 2 sind über den Codierbereichen 12 positioniert dargestellt und detektieren die angedeutete Bit-Folge 010010. Der bündig abschließende Rand 15 kann in dieser Ausführungsform als eine Inkrementalspur verwendet werden.

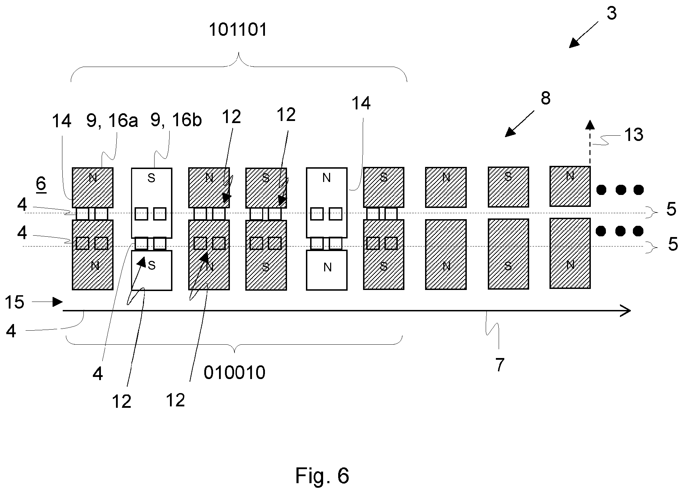

In Fig. 6 ist eine schematische Darstellung einer Magnetspur 8 eines magnetischen Antriebs 1 gezeigt, wobei die Codierbereiche 12 durch zweiteilig ausgeführte Antriebselemente 9 innerhalb der Magnetspur 8 ausgebildet sind. Der Versatz 11 ergibt sich in dieser Ausführungsform durch den Abstand zwischen einem ersten 16a und einen zweiten 16b Teil eines Antriebselementes 9. Die jeweiligen Teile 16a, 16b sind dabei quer zu der Spurrichtung 7 versetzt, was durch einen gestrichelten Pfeil 13 in Fig. 6 angedeutet ist. Durch die Abstände zwischen den jeweiligen Teilen 16a, 16b der Antriebselemente 9 bilden sich zwei Maßverkörperungen 5 innerhalb der Magnetspur 8 aus, wenn die Antriebselemente 9 wie in Fig. 6 dargestellt, beispielsweise abschnittsweise alternierend, d.h. abschnittsweise jeweils um 180° zueinander gedreht, aufeinanderfolgend zu einer Magnetspur 8 angeordnet werden. Dies hat den Vorteil, dass durch die Drehung, bzw. die Punktsymmetrie zweier Antriebselemente 9 zueinander, sich eine erste und dazu zweite, komplementäre Maßverkörperung 5 ausbildet. In dieser Form lassen sich die bündig abschließenden Ränder 15 der Magnetspur 8 zusätzlich als inkrementale Maßverkörperungen 5 verwenden. Von den in Fig. 6 eingezeichneten 24 Sensorelementen 4 des ersten Körpers 2 sind jeweils 2 Sensorelemente über einem Codierbereich 12 einer jeweiligen Maßverkörperung 5 positioniert dargestellt und detektieren die angedeutete Bit-Folge 010010, bzw. die dazu komplementäre Bit-Folge 101101. Der bündig abschließende Rand 15 kann in dieser Form als eine Inkrementalspur verwendet werden.

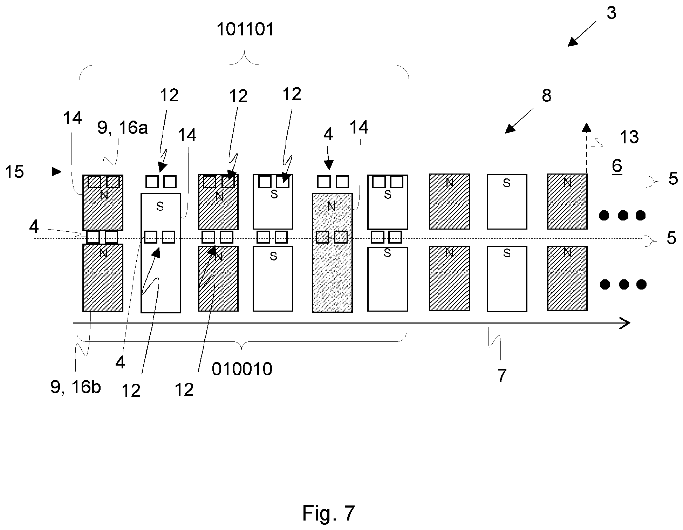

In Fig. 7 ist eine schematische Darstellung einer weiteren Form der Magnetspur 8 des erfindungsgemäßen magnetischen Antriebs 1 gezeigt, wobei die Codierbereiche 12 teilweise durch zweiteilig ausgeführte Antriebselemente 9 innerhalb der Magnetspur 8 ausgebildet sind und teilweise durch Antriebselemente 9, die eine unterschiedliche Länge 14 aufweisen. Die jeweiligen Teile 16a, 16b sind dabei quer zu der Spurrichtung 7 versetzt, was durch einen gestrichelten Pfeil 13 in Fig. 7 angedeutet ist. In dieser Ausführungsform ergibt sich durch den teilweisen zweiteiligen Aufbau der Antriebselemente 9 mit einem ersten 16a und zweiten 16b Teil im Wesentlichen in der Mitte der Magnetspur 8 eine erste Maßverkörperung 5. Durch die zusätzliche teilweise unterschiedliche Länge 14 der Antriebselemente 9 ergibt sich an einem Rand 15 eine weitere, zu der ersten komplementären Maßverkörperung 5. Der dazu gegenüberliegende, bündig abschließenden Rand 15, kann als eine inkrementale Maßverkörperung benutzt werden. Die über den jeweiligen Codierbereichen 12 positionierten Sensorelemente 4 des ersten Körpers 2 würden demnach die in der Fig. 7 dargestellte erste Bit-Folge 101101 bzw. die dazu komplementäre Bit-Folge 010010 messen.

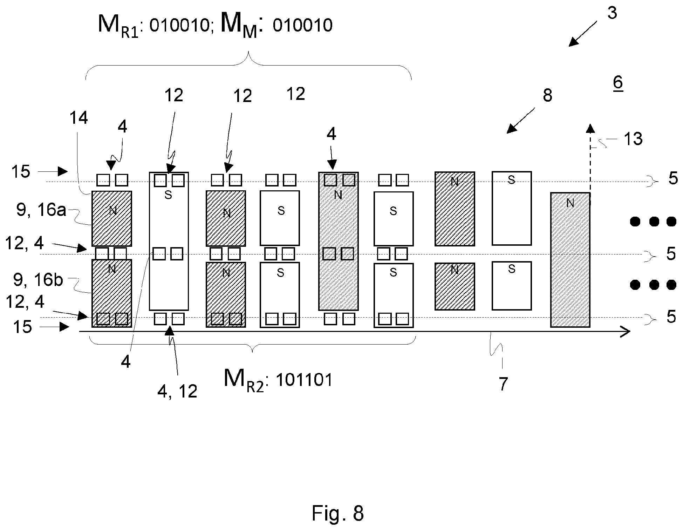

In Fig. 8 ist eine schematische Darstellung einer Ausführungsform der Magnetspur 8 des erfindungsgemäßen magnetischen Antriebs 1 gezeigt, wobei die Codierbereiche 12 teilweise durch zweiteilig 16a, 16b ausgeführte Antriebselemente 9 innerhalb der Magnetspur 8 ausgebildet sind und zusätzlich teilweise zueinander versetzt 11 angeordnet sind. In dieser Ausführungsform entstehen durch die jeweiligen Anordnungen der Antriebselemente 9, d.h. durch den Versatz 11 zwischen einem ersten 16a und zweiten 16b Teil eines Antriebselementes eine erste Maßverkörperung 5, welche im Wesentlichen in der Mitte der Magnetspur 8 verläuft. Zwei weitere Maßverkörperungen 5, ergeben sich durch den teilweisen Versatz 11 der Antriebselemente 9 zueinander an den jeweiligen Rändern 15 der Magnetspur 8. Die Sensorelemente 4 des ersten Körpers 2 sind über den jeweiligen Codierbereichen 12 der jeweiligen Maßverkörperungen 5 angeordnet, so dass sich eine an dem ersten Rand 15 gemessene Bit-Folge von M_{R1} 010010 ergeben würde. Eine an dem dazu gegenüberliegendem Rand 15 gemessene Bit-Folge von M_{R2} 101101 und die folgende Bit-Folge in der mittleren Maßverkörperung 5 M_{M} 010010. Die Bit-Folgen M_{R1} und M_{R2} der jeweiligen Ränder 15 sind komplementäre Bit-Folgen zueinander, so dass die Genauigkeit der Positionsmessung erhöht ist. Der Versatz 11 zwischen den Antriebselementen bzw. zwischen den ersten 16a und zweiten 16b Teilen der Antriebselemente 9 ist jeweils quer zu der Spurrichtung 7 versetzt und durch einen gestrichelten Pfeil 13 in Fig. 8 angedeutet.

### Liste der Bezugszeichen

- 1: Magnetischer Antrieb
- 2: Erster Körper
- 3: Zweiter Körper
- 4: Sensorelemente
- 5: Maßverkörperung
- 6: Spurebene
- 7: Spurrichtung
- 8: Magnetspur
- 9: Antriebselemente
- 10: Abschnitt
- 11: Versatz
- 12: Codierbereich
- 13: Richtung quer zur Spurrichtung
- 14: Länge
- 15: Rand
- 16a: erster Teil eines Antriebselementes
- 16b: zweiter Teil eines Antriebselementes
- 17: Referenzposition
- 18: Endabschnitt eines Antriebselementes

## Patentansprüche

1. Magnetischer Antrieb (1) aufweisend einen Absolutwertgeber, zur Bestimmung einer Absolutposition eines ersten Körpers (2) des magnetischen Antriebs (1), der sich verstellbar zu einem zweiten Körper (3) des magnetischen Antriebs (1) um eine Position, insbesondere eine Längenposition, zu diesem verschiebt, wobei der erste Körper (2) Sensorelemente (4) aufweist, um aus einer Maßverkörperung (5) des Absolutwertgebers die Absolutposition zu ermitteln und wobei der zweite Körper (3) in einer Spurebene (6) entlang einer Spurrichtung (7), insbesondere äquidistant, voneinander beabstandete zu einer Magnetspur (8) angeordnete magnetische Antriebselemente (9) aufweist, wobei durch die jeweilige Anordnung der Antriebselemente (9) in der Spurebene (6) die Maßverkörperung (5) ausgebildet ist, wobei die Antriebselemente (9) in der Spurebene (6) der Magnetspur (8), quer (13) zu der Spurrichtung (7), insbesondere parallel zueinander, zumindest teilweise um einen jeweiligen Versatz (11) zueinander angeordnet sind, so dass der jeweilige Versatz (11) einen jeweiligen Codierbereich (12) des Antriebselements (9) der Magnetspur (8) ausbildet, **dadurch gekennzeichnet, dass** die Antriebselemente (9) so zueinander in der Magnetspur (8) angeordnet sind, dass durch die Codierbereiche (12) die Maßverkörperung (5) an den Rändern (15) der Magnetspur (8) ausgebildet ist.

2. Magnetischer Antrieb nach Anspruch 1, **dadurch gekennzeichnet, dass** die Antriebselemente (9) in der Spurebene (6) der Magnetspur (8) mehrteilig ausgebildet sind und die jeweiligen Teile (16a, 16b) quer (13) zu der Spurrichtung (7) den Versatz (11) aufweisen, so dass die Versätze der jeweiligen Teile (16a, 16b) jeweilige Codierbereiche (12) des Antriebselements (9) ausbilden und die Antriebselemente (9) so zueinander in der Magnetspur (8) angeordnet sind, dass durch die Codierbereiche (12) mehrere Maßverkörperungen (5) in der Magnetspur (8) ausgebildet sind.

3. Magnetischer Antrieb nach Anspruch 2, **dadurch gekennzeichnet, dass** die Antriebselemente (9) in der Spurebene (6) der Magnetspur (8), quer (13) zu der Spurrichtung (7), als zusätzlichen Versatz (11) eine jeweilige Länge (14) aufweisen, so dass die jeweilige Länge (14) einen jeweiligen Codierbereich (12) des Antriebselements (9) der Magnetspur (8) ausbildet und die Antriebselemente (9) so zueinander in der Magnetspur (8) angeordnet sind, dass durch die Codierbereiche (12) die Maßverkörperung (5) an den Rändern (15) der Magnetspur (8) ausgebildet ist.

4. Magnetischer Antrieb nach Anspruch 1, **dadurch gekennzeichnet, dass** die Antriebselemente (9) in der Spurebene (6) der Magnetspur (8) zweiteilig ausgebildet sind und der erste Teil (16a) zu dem zweiten Teil (16b) quer (13) zu der Spurrichtung (7) den Versatz (11) aufweist, so dass durch den Versatz (11) im Antriebselement (9) ein Codierbereich (12) ausgebildet ist und die Antriebselemente (9) so zueinander in der Magnetspur (8) angeordnet sind, dass durch die Codierbereiche (12) zwei komplementäre Maßverkörperungen (5) in der Magnetspur (8) ausgebildet sind.

5. Magnetischer Antrieb nach einem der Ansprüche 1 bis 4, **dadurch gekennzeichnet, dass** der erste Körper (2) mindestens N Sensorelemente (4) aufweist, deren Anordnung in der Spurebene (6) entlang der Spurrichtung (7) an die Anordnung der Antriebselemente (9) derart angeglichen ist, dass in Positionen des ersten Körpers (2) jeweils ein Sensorelement (4) der N Sensorelemente (4) über dem Codierbereich (12) eines jeweiligen Antriebselementes (9) der Antriebselemente (9) angeordnet ist.

6. Magnetischer Antrieb nach einem der Ansprüche 1 bis 4, **dadurch gekennzeichnet, dass** der erste Körper (2) mindestens 2N Sensorelemente (4) aufweist, deren Anordnung in der Spurebene (6) entlang der Spurrichtung (7) an die Anordnung der Antriebselemente (9) derart angeglichen ist, dass in Positionen des ersten Körpers (2) jeweils zwei Sensorelemente (4) der 2N Sensorelemente (4) über dem Codierbereich (12) eines jeweiligen Antriebselementes (9) der Antriebselemente (9) angeordnet sind.

7. Magnetischer Antrieb nach einem der Ansprüche 1 bis 4 **dadurch gekennzeichnet, dass** der erste Körper (2) mindestens 2N Sensorelemente (4) aufweist, deren Anordnung in der Spurebene (6) entlang der Spurrichtung (7) an die Anordnung der Antriebselemente (9) angeglichen ist, so dass in Positionen des ersten Körpers (2) jeweils ein Sensorelement (4) der 2N Sensorelemente (4) über jeweils einem der Codierbereiche (12) eines jeweiligen Antriebselementes (9) der Antriebselemente (9) angeordnet ist.

8. Magnetischer Antrieb nach einem der Ansprüche 1 bis 4 **dadurch gekennzeichnet, dass** der erste Körper (2) mindestens 4N Sensorelemente (4) aufweist, deren Anordnung in der Spurebene (6) entlang der Spurrichtung (7) an die Anordnung der Antriebselemente (9) angeglichen ist, so dass in Positionen des ersten Körpers (2) jeweils zwei Sensorelemente (4) der 4N Sensorelemente (4) über jeweils einem der Codierbereiche (12) eines jeweiligen Antriebselementes (9) der Antriebselemente (9) angeordnet sind.

9. Magnetischer Antrieb nach einem der vorherigen Ansprüche, **dadurch gekennzeichnet, dass** jeweils R aufeinanderfolgende Codierbereiche (12) ein jeweiliges Codewort der Maßverkörperung (5) bilden und jedes Codewort entlang der Magnetspur (8) einmalig ist und eine Absolutposition darstellt.

10. Magnetischer Antrieb nach einem der vorherigen Ansprüche, **dadurch gekennzeichnet, dass** die Gesamtheit der durch die Codierbereiche (12) der Maßverkörperung (5) codierten Zeichenfolge als ein Pseudo-Random-Binary-Sequence-Code - PRBS-Code - ausgebildet ist.

11. Magnetischer Antrieb nach einem der vorherigen Ansprüche, **dadurch gekennzeichnet, dass** die Antriebselemente (9) als Permanentmagnete und/oder als Magnetspulen ausgebildet sind.

12. Magnetischer Antrieb nach einem der Ansprüche 1 bis 11, **dadurch gekennzeichnet** das der Antrieb (1) als Linearantrieb ausgebildet ist und eine Auswerteeinheit umfasst, die eingerichtet ist, Sensordaten der Sensorelemente (4) auszulesen und zu verarbeiten, um aus den Sensordaten die Absolutposition des ersten Körpers (2) zu berechnen, wobei die magnetischen Antriebselemente (9) des zweiten Körpers (3) mit magnetischen Antriebselementen (9) des ersten Körpers (2) zum Antrieb des ersten Körpers (2) magnetisch wechselwirken.

13. Verfahren zur Herstellung eines magnetischen Antriebs aufweisend einen magnetischen Absolutwertgeber, zur Bestimmung einer Absolutposition eines ersten Körpers (2) des magnetischen Antriebs (1), der sich verstellbar zu einem zweiten Körper (3) des magnetischen Antriebs (1) um eine Position, insbesondere um eine Längenposition, zu diesem verschiebt, wobei der erste Körper (2) Sensorelemente (4) aufweist, um aus einer Maßverkörperung (5) die Absolutposition zu ermitteln und wobei der zweite Körper (3) magnetische Antriebselemente (9) aufweist, das Verfahren die folgenden Schritte umfassend:
- Aufbau einer Magnetspur (8), indem die Antriebselemente (9), insbesondere äquidistant, voneinander beabstandet zu der Magnetspur (8) entlang einer Spurrichtung (7) angeordnet werden, so dass die Antriebselemente (9) in ihrer Gesamtheit eine Spurebene (6) ausbilden;
- Anordnen der Antriebselemente (9) in der Spurebene (6), insbesondere quer zu der Spurrichtung (7), so dass sich durch die jeweilige Anordnung der Antriebselemente (9) in der Spurebene (6) die Maßverkörperung (5) ausbildet.
- Anordnen der Antriebselemente (9) in der Spurebene (6) der Magnetspur (8), quer zu der Spurrichtung (7), insbesondere parallel zueinander, um einen jeweiligen Versatz (11) zueinander, so dass der jeweilige Versatz (11) einen jeweiligen Codierbereich (12) des Antriebselements (9) der Magnetspur (8) ausbildet und die Antriebselemente (9) so zueinander in der Magnetspur (8) angeordnet sind, dass sich durch die Codierbereiche (12) die Maßverkörperung (5) an den Rändern (15) der Magnetspur (8) ausbildet.

14. Verfahren zur Herstellung eines magnetischen Antriebs nach Anspruch 13 aufweisend einen magnetischen Absolutwertgeber, ferner die folgenden Schritte aufweisend:
- Anordnen der Antriebselemente (9) in der Spurebene (6) der Magnetspur (8), wobei die Antriebselemente mehrteilig ausgebildet sind und die jeweiligen Teile (16a, 16b) quer (13) zu der Spurrichtung (7) den Versatz (11) aufweisen, so dass die Versätze der jeweiligen Teile (16a, 16b) jeweilige Codierbereiche (12) des Antriebselements (9) ausbilden und die Antriebselemente (9) so zueinander in der Magnetspur (8) angeordnet sind, dass durch die Codierbereiche (12) mehrere Maßverkörperungen (5) in der Magnetspur (8) ausgebildet sind.

15. Verfahren zur Herstellung eines magnetischen Antriebs nach Anspruch 14 aufweisend einen magnetischen Absolutwertgeber, ferner die folgenden Schritte aufweisend:
- Anordnen der Antriebselemente (9) in der Spurebene (6) der Magnetspur (8), quer zu der Spurrichtung (7), wobei die Antriebselemente (9) als zusätzlichen Versatz eine jeweilige Länge (14) aufweisen, so dass die jeweilige Länge (14) einen jeweiligen Codierbereich (12) des Antriebselements (9) der Magnetspur (8) ausbildet und die Antriebselemente (9) so zueinander in der Magnetspur (8) angeordnet sind, dass sich durch die Codierbereiche (12) die Maßverkörperung (5) an den Rändern (15) der Magnetspur (8) ausbildet.

## Claims

1. Magnetic drive (1) comprising an absolute encoder, for determining an absolute position of a first body (2) of the magnetic drive (1), which is adjustably displaced relative to a second body (3) of the magnetic drive (1) by a position, in particular a longitudinal position, relative thereto, wherein the first body (2) comprises sensor elements (4), in order to determine the absolute position from a scale (5) of the absolute encoder, and wherein the second body (3) comprises magnetic drive elements (9) arranged in a track plane (6) along a track direction (7), in particular equidistantly, spaced apart from one another to form a magnetic track (8), wherein the scale (5) is formed by the respective arrangement of the drive elements (9) in the track plane (6), wherein the drive elements (9) in the track plane (6) of the magnetic track (8), transversely (13) to the track direction (7), in particular parallel to one another, are arranged at least partially with a respective offset (11) relative to one another, such that the respective offset (11) forms a respective coding region (12) of the drive element (9) of the magnetic track (8), **characterised in that** the drive elements (9) are arranged relative to one another in the magnetic track (8) such that the scale (5) is formed by the coding regions (12) at the edges (15) of the magnetic track (8).

2. Magnetic drive according to claim 1, **characterised in that** the drive elements (9) in the track plane (6) of the magnetic track (8) are formed in multiple parts and the respective parts (16a, 16b) have the offset (11) transversely (13) to the track direction (7), such that the offsets of the respective parts (16a, 16b) form respective coding regions (12) of the drive element (9) and the drive elements (9) are arranged relative to one another in the magnetic track (8) such that a plurality of scales (5) are formed in the magnetic track (8) by the coding regions (12).

3. Magnetic drive according to claim 2, **characterised in that** the drive elements (9) in the track plane (6) of the magnetic track (8), transversely (13) to the track direction (7), have a respective length (14) as an additional offset (11), such that the respective length (14) forms a respective coding region (12) of the drive element (9) of the magnetic track (8) and the drive elements (9) are arranged relative to one another in the magnetic track (8) such that the scale (5) is formed by the coding regions (12) at the edges (15) of the magnetic track (8).

4. Magnetic drive according to claim 1, **characterised in that** the drive elements (9) in the track plane (6) of the magnetic track (8) are formed in two parts and the first part (16a) has the offset (11) relative to the second part (16b) transversely (13) to the track direction (7), such that a coding region (12) is formed in the drive element (9) by the offset (11) and the drive elements (9) are arranged relative to one another in the magnetic track (8) such that two complementary scales (5) are formed in the magnetic track (8) by the coding regions (12).

5. Magnetic drive according to any one of claims 1 to 4, **characterised in that** the first body (2) comprises at least N sensor elements (4), the arrangement of which in the track plane (6) along the track direction (7) is adapted to the arrangement of the drive elements (9) in such a manner that, in positions of the first body (2), in each case one sensor element (4) of the N sensor elements (4) is arranged over the coding region (12) of a respective drive element (9) of the drive elements (9).

6. Magnetic drive according to any one of claims 1 to 4, **characterised in that** the first body (2) comprises at least 2N sensor elements (4), the arrangement of which in the track plane (6) along the track direction (7) is adapted to the arrangement of the drive elements (9) in such a manner that, in positions of the first body (2), in each case two sensor elements (4) of the 2N sensor elements (4) are arranged over the coding region (12) of a respective drive element (9) of the drive elements (9).

7. Magnetic drive according to any one of claims 1 to 4, **characterised in that** the first body (2) comprises at least 2N sensor elements (4), the arrangement of which in the track plane (6) along the track direction (7) is adapted to the arrangement of the drive elements (9), such that, in positions of the first body (2), in each case one sensor element (4) of the 2N sensor elements (4) is arranged over in each case one of the coding regions (12) of a respective drive element (9) of the drive elements (9).

8. Magnetic drive according to any one of claims 1 to 4, **characterised in that** the first body (2) comprises at least 4N sensor elements (4), the arrangement of which in the track plane (6) along the track direction (7) is adapted to the arrangement of the drive elements (9), such that, in positions of the first body (2), in each case two sensor elements (4) of the 4N sensor elements (4) are arranged over in each case one of the coding regions (12) of a respective drive element (9) of the drive elements (9).

9. Magnetic drive according to any one of the preceding claims, **characterised in that** in each case R consecutive coding regions (12) form a respective code word of the scale (5) and each code word along the magnetic track (8) is unique and represents an absolute position.

10. Magnetic drive according to any one of the preceding claims, **characterised in that** the entirety of the character sequence coded by the coding regions (12) of the scale (5) is formed as a pseudo-random binary sequence code - PRBS code.

11. Magnetic drive according to any one of the preceding claims, **characterised in that** the drive elements (9) are formed as permanent magnets and/or as magnetic coils.

12. Magnetic drive according to any one of claims 1 to 11, **characterised in that** the drive (1) is formed as a linear drive and comprises an evaluation unit which is configured to read out and process sensor data of the sensor elements (4), in order to calculate the absolute position of the first body (2) from the sensor data, wherein the magnetic drive elements (9) of the second body (3) magnetically interact with magnetic drive elements (9) of the first body (2) for driving the first body (2).

13. Method for manufacturing a magnetic drive comprising a magnetic absolute encoder, for determining an absolute position of a first body (2) of the magnetic drive (1), which is adjustably displaced relative to a second body (3) of the magnetic drive (1) by a position, in particular by a longitudinal position, relative thereto, wherein the first body (2) comprises sensor elements (4), in order to determine the absolute position from a scale (5), and wherein the second body (3) comprises magnetic drive elements (9), the method comprising the following steps:
- constructing a magnetic track (8) by arranging the drive elements (9), in particular equidistantly, spaced apart from one another to form the magnetic track (8) along a track direction (7), such that the drive elements (9) in their entirety form a track plane (6);
- arranging the drive elements (9) in the track plane (6), in particular transversely to the track direction (7), such that the scale (5) is formed by the respective arrangement of the drive elements (9) in the track plane (6).
- arranging the drive elements (9) in the track plane (6) of the magnetic track (8), transversely to the track direction (7), in particular parallel to one another, with a respective offset (11) relative to one another, such that the respective offset (11) forms a respective coding region (12) of the drive element (9) of the magnetic track (8) and the drive elements (9) are arranged relative to one another in the magnetic track (8) such that the scale (5) is formed by the coding regions (12) at the edges (15) of the magnetic track (8).

14. Method for manufacturing a magnetic drive according to claim 13 comprising a magnetic absolute encoder, further comprising the following steps:
- arranging the drive elements (9) in the track plane (6) of the magnetic track (8), wherein the drive elements are formed in multiple parts and the respective parts (16a, 16b) have the offset (11) transversely (13) to the track direction (7), such that the offsets of the respective parts (16a, 16b) form respective coding regions (12) of the drive element (9) and the drive elements (9) are arranged relative to one another in the magnetic track (8) such that a plurality of scales (5) are formed in the magnetic track (8) by the coding regions (12).

15. Method for manufacturing a magnetic drive according to claim 14 comprising a magnetic absolute encoder, further comprising the following steps:
- arranging the drive elements (9) in the track plane (6) of the magnetic track (8), transversely to the track direction (7), wherein the drive elements (9) have a respective length (14) as an additional offset, such that the respective length (14) forms a respective coding region (12) of the drive element (9) of the magnetic track (8) and the drive elements (9) are arranged relative to one another in the magnetic track (8) such that the scale (5) is formed by the coding regions (12) at the edges (15) of the magnetic track (8).

## Revendications

1. Entraînement magnétique (1) comprenant un codeur absolu, destiné à déterminer une position absolue d'un premier corps (2) de l'entraînement magnétique (1), qui est déplacé de manière réglable par rapport à un second corps (3) de l'entraînement magnétique (1) d'une position, en particulier d'une position longitudinale, par rapport à celui-ci, dans lequel le premier corps (2) comprend des éléments capteurs (4), afin de déterminer la position absolue à partir d'une règle de mesure (5) du codeur absolu, et dans lequel le second corps (3) comprend des éléments d'entraînement magnétiques (9) disposés dans un plan de piste (6) le long d'une direction de piste (7), en particulier de manière équidistante, espacés les uns des autres d'une piste magnétique (8), dans lequel la règle de mesure (5) est formée par l'agencement respectif des éléments d'entraînement (9) dans le plan de piste (6), dans lequel les éléments d'entraînement (9) dans le plan de piste (6) de la piste magnétique (8), transversalement (13) à la direction de piste (7), en particulier parallèlement les uns aux autres, sont disposés au moins partiellement avec un décalage respectif (11) les uns par rapport aux autres, de sorte que le décalage respectif (11) forme une région de codage respective (12) de l'élément d'entraînement (9) de la piste magnétique (8), **caractérisé en ce que** les éléments d'entraînement (9) sont disposés les uns par rapport aux autres dans la piste magnétique (8) de telle sorte que la règle de mesure (5) est formée par les régions de codage (12) au niveau des bords (15) de la piste magnétique (8).

2. Entraînement magnétique selon la revendication 1, **caractérisé en ce que** les éléments d'entraînement (9) dans le plan de piste (6) de la piste magnétique (8) sont réalisés en plusieurs parties et les parties respectives (16a, 16b) présentent le décalage (11) transversalement (13) à la direction de piste (7), de sorte que les décalages des parties respectives (16a, 16b) forment des régions de codage respectives (12) de l'élément d'entraînement (9) et les éléments d'entraînement (9) sont disposés les uns par rapport aux autres dans la piste magnétique (8) de telle sorte que plusieurs règles de mesure (5) sont formées dans la piste magnétique (8) par les régions de codage (12).

3. Entraînement magnétique selon la revendication 2, **caractérisé en ce que** les éléments d'entraînement (9) dans le plan de piste (6) de la piste magnétique (8), transversalement (13) à la direction de piste (7), présentent une longueur respective (14) comme décalage supplémentaire (11), de sorte que la longueur respective (14) forme une région de codage respective (12) de l'élément d'entraînement (9) de la piste magnétique (8) et les éléments d'entraînement (9) sont disposés les uns par rapport aux autres dans la piste magnétique (8) de telle sorte que la règle de mesure (5) est formée par les régions de codage (12) au niveau des bords (15) de la piste magnétique (8).

4. Entraînement magnétique selon la revendication 1, **caractérisé en ce que** les éléments d'entraînement (9) dans le plan de piste (6) de la piste magnétique (8) sont réalisés en deux parties et la première partie (16a) présente le décalage (11) par rapport à la seconde partie (16b) transversalement (13) à la direction de piste (7), de sorte qu'une région de codage (12) est formée dans l'élément d'entraînement (9) par le décalage (11) et les éléments d'entraînement (9) sont disposés les uns par rapport aux autres dans la piste magnétique (8) de telle sorte que deux règles de mesure complémentaires (5) sont formées dans la piste magnétique (8) par les régions de codage (12).

5. Entraînement magnétique selon l'une des revendications 1 à 4, **caractérisé en ce que** le premier corps (2) comprend au moins N éléments capteurs (4), dont l'agencement dans le plan de piste (6) le long de la direction de piste (7) est adapté à l'agencement des éléments d'entraînement (9) de telle manière que, dans des positions du premier corps (2), respectivement un élément capteur (4) des N éléments capteurs (4) est disposé au-dessus de la région de codage (12) d'un élément d'entraînement respectif (9) des éléments d'entraînement (9).

6. Entraînement magnétique selon l'une des revendications 1 à 4, **caractérisé en ce que** le premier corps (2) comprend au moins 2N éléments capteurs (4), dont l'agencement dans le plan de piste (6) le long de la direction de piste (7) est adapté à l'agencement des éléments d'entraînement (9) de telle manière que, dans des positions du premier corps (2), respectivement deux éléments capteurs (4) des 2N éléments capteurs (4) sont disposés au-dessus de la région de codage (12) d'un élément d'entraînement respectif (9) des éléments d'entraînement (9).

7. Entraînement magnétique selon l'une des revendications 1 à 4, **caractérisé en ce que** le premier corps (2) comprend au moins 2N éléments capteurs (4), dont l'agencement dans le plan de piste (6) le long de la direction de piste (7) est adapté à l'agencement des éléments d'entraînement (9), de sorte que, dans des positions du premier corps (2), respectivement un élément capteur (4) des 2N éléments capteurs (4) est disposé au-dessus de respectivement l'une des régions de codage (12) d'un élément d'entraînement respectif (9) des éléments d'entraînement (9).

8. Entraînement magnétique selon l'une des revendications 1 à 4, **caractérisé en ce que** le premier corps (2) comprend au moins 4N éléments capteurs (4), dont l'agencement dans le plan de piste (6) le long de la direction de piste (7) est adapté à l'agencement des éléments d'entraînement (9), de sorte que, dans des positions du premier corps (2), respectivement deux éléments capteurs (4) des 4N éléments capteurs (4) sont disposés au-dessus de respectivement l'une des régions de codage (12) d'un élément d'entraînement respectif (9) des éléments d'entraînement (9).

9. Entraînement magnétique selon l'une des revendications précédentes, **caractérisé en ce que** respectivement R régions de codage consécutives (12) forment un mot de code respectif de la règle de mesure (5) et chaque mot de code le long de la piste magnétique (8) est unique et représente une position absolue.

10. Entraînement magnétique selon l'une des revendications précédentes, **caractérisé en ce que** la totalité de la suite de caractères codée par les régions de codage (12) de la règle de mesure (5) est réalisée sous la forme d'un code de séquence binaire pseudo-aléatoire - code PRBS.

11. Entraînement magnétique selon l'une des revendications précédentes, **caractérisé en ce que** les éléments d'entraînement (9) sont réalisés comme des aimants permanents et/ou comme des bobines magnétiques.

12. Entraînement magnétique selon l'une des revendications 1 à 11, **caractérisé en ce que** l'entraînement (1) est réalisé comme un entraînement linéaire et comprend une unité d'évaluation qui est configurée pour lire et traiter des données de capteur des éléments capteurs (4), afin de calculer la position absolue du premier corps (2) à partir des données de capteur, dans lequel les éléments d'entraînement magnétiques (9) du second corps (3) interagissent magnétiquement avec des éléments d'entraînement magnétiques (9) du premier corps (2) pour l'entraînement du premier corps (2).

13. Procédé de fabrication d'un entraînement magnétique comprenant un codeur absolu magnétique, destiné à déterminer une position absolue d'un premier corps (2) de l'entraînement magnétique (1), qui est déplacé de manière réglable par rapport à un second corps (3) de l'entraînement magnétique (1) d'une position, en particulier d'une position longitudinale, par rapport à celui-ci, dans lequel le premier corps (2) comprend des éléments capteurs (4), afin de déterminer la position absolue à partir d'une règle de mesure (5), et dans lequel le second corps (3) comprend des éléments d'entraînement magnétiques (9), le procédé comprenant les étapes suivantes :
- Construction d'une piste magnétique (8), en agençant les éléments d'entraînement (9), en particulier de manière équidistante, espacés les uns des autres **(pour former) de** la piste magnétique (8) le long d'une direction de piste (7), de sorte que les éléments d'entraînement (9) dans leur totalité forment un plan de piste (6) ;
- Agencement des éléments d'entraînement (9) dans le plan de piste (6), en particulier transversalement à la direction de piste (7), de sorte que la règle de mesure (5) est formée par l'agencement respectif des éléments d'entraînement (9) dans le plan de piste (6).
- Agencement des éléments d'entraînement (9) dans le plan de piste (6) de la piste magnétique (8), transversalement à la direction de piste (7), en particulier parallèlement les uns aux autres, avec un décalage respectif (11) les uns par rapport aux autres, de sorte que le décalage respectif (11) forme une région de codage respective (12) de l'élément d'entraînement (9) de la piste magnétique (8) et les éléments d'entraînement (9) sont disposés les uns par rapport aux autres dans la piste magnétique (8) de telle sorte que la règle de mesure (5) est formée par les régions de codage (12) au niveau des bords (15) de la piste magnétique (8).

14. Procédé de fabrication d'un entraînement magnétique selon la revendication 13 comprenant un codeur absolu magnétique, comprenant en outre les étapes suivantes :
- Agencement des éléments d'entraînement (9) dans le plan de piste (6) de la piste magnétique (8), dans lequel les éléments d'entraînement sont réalisés en plusieurs parties et les parties respectives (16a, 16b) présentent le décalage (11) transversalement (13) à la direction de piste (7), de sorte que les décalages des parties respectives (16a, 16b) forment des régions de codage respectives (12) de l'élément d'entraînement (9) et les éléments d'entraînement (9) sont disposés les uns par rapport aux autres dans la piste magnétique (8) de telle sorte que plusieurs règles de mesure (5) sont formées dans la piste magnétique (8) par les régions de codage (12).

15. Procédé de fabrication d'un entraînement magnétique selon la revendication 14 comprenant un codeur absolu magnétique, comprenant en outre les étapes suivantes :
- Agencement des éléments d'entraînement (9) dans le plan de piste (6) de la piste magnétique (8), transversalement à la direction de piste (7), dans lequel les éléments d'entraînement (9) présentent une longueur respective (14) comme décalage supplémentaire, de sorte que la longueur respective (14) forme une région de codage respective (12) de l'élément d'entraînement (9) de la piste magnétique (8) et les éléments d'entraînement (9) sont disposés les uns par rapport aux autres dans la piste magnétique (8) de telle sorte que la règle de mesure (5) est formée par les régions de codage (12) au niveau des bords (15) de la piste magnétique (8).
